# EUROPEAN PATENT APPLICATION

(11) **EP 1 860 490 A1**
(43) Date of publication of application: **28.11.2007**
(21) Application number: 06016553.7
(22) Date of filing: 08.08.2006
(51) Int. Cl.: G02F 1/1362, G02F 1/1368, G02F 1/1333, G02F 1/1343, G02F 1/139

(54) **Vertical alignment type liquid crystal displays**

(30) Priority: 26.05.2006 US 420538
(71) Applicant: Au Optronics Corporation, Hsin-Chu 300 (TW)
(72) Inventor: Chiu, Chun-Chang, Tao Yuan Shien (TW)
(74) Representative: Hruschka, Jürgen

(57) **Abstract**

A vertical alignment type liquid crystal display comprising a plurality of pixel areas, wherein each pixel area is driven by a source line (701) and a gate line (702), comprises: a first and a second substrates disposed opposite each other and a liquid crystal layer interposed therebetween; a first pixel driving device and a second pixel driving device are respectively coupled to a first pixel electrode (704) and a second pixel electrode (705) and formed on the first substrate; the first and the second pixel electrodes having a plurality of slits, wherein the first and the second pixel driving devices have mutually different open currents, resulting in the first and the second pixel electrodes having mutually different voltages so that the liquid crystal layer comprises two liquid crystal orientation areas having mutually different orientations; a common electrode having one or more protrusion or slits formed on the interior of the second substrate.

## Description

### BACKGROUND

The invention relates to liquid crystal displays, and more particularly to vertical alignment (hereafter called "VA") type liquid crystal displays with widen viewing angle.

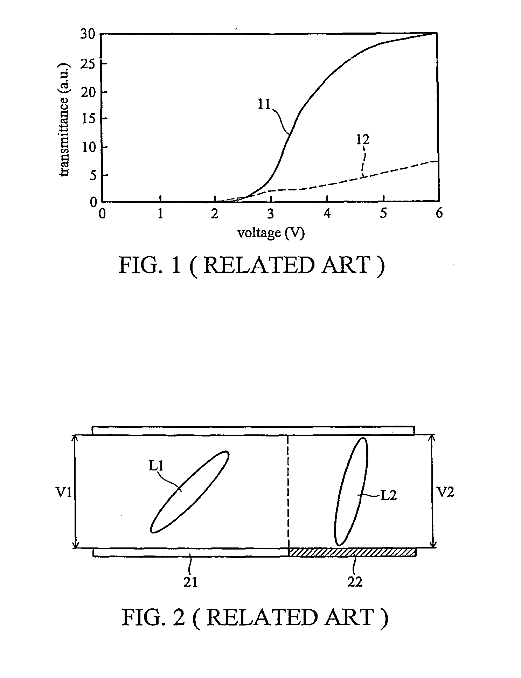

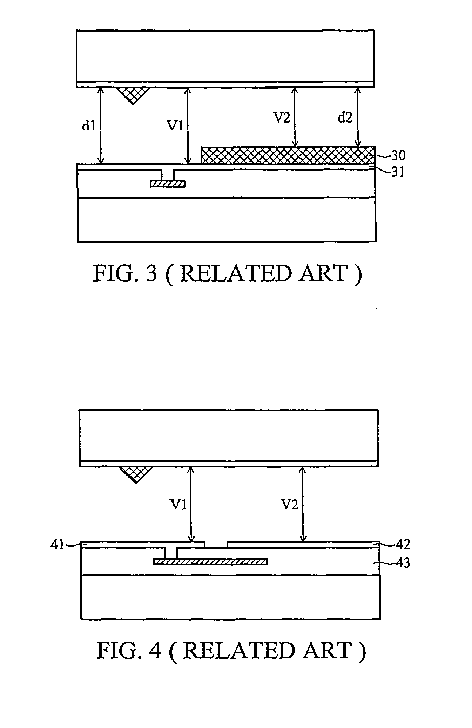

The feature of rapid response time has enhanced the VA type liquid crystal displays to become the dominated liquid crystal displays. However, compared to the In plane Switch (IPS) type liquid crystal displays, the narrow viewing angle of VA type liquid crystal displays has been a problematic to future developing. When viewing a VA type liquid crystal display at an oblique angle, gamma washout phenomenon raised, limiting the view ability. Fig.1 is a voltage-transmittance scheme diagram of a VA type liquid crystal display with different viewing angles. In Fig.1, curve 11 is a voltage-transmittance curve of 0 degree normal viewing for the VA type liquid crystal display and curve 12 is of 60 degree oblique viewing. According to the features of VA type liquid crystal displays, the transmittance substantially increases along with increased voltage. If transmittance fails to increase along with the increased voltage, or decreases, color dispersion is generated. Take curve 12 for example, the increased range of transmittance is not as the voltage increases from 3V to 4V, thus color dispersion of curve 12 is worse than the color dispersion of curve 11. One kind of technologies used to resolve the above-mentioned issue, the pixel division technology is preferred. Fig.2 is a schematic diagram of pixel division. In Fig.2, a pixel is divided into two pixel areas, first pixel area 21 with voltage V1 and second pixel area 22 with voltage V2, wherein V1 ≠ V2. When charging, liquid crystal elements L1 and L2 have mutually different orientation directions due to the first and second pixel areas having mutually different voltages, thus, the issue of color dispersion can be improved. Fig.3 is a schematic diagram of a pixel of a conventional display according to the Fig.2. In Fig.3, a dielectric layer 30 is provided above the pixel electrode to generate mutually different voltages V1 and V2. Forming the dielectric layer on the pixel electrode could improve the color dispersion issue, but the Mura and after-images problems raised due to the non-uniform cell gap. Fig.4 is a scheme diagram of another conventional display according to the Fig.2. To improve detrimental effects caused by the non-uniform cell gaps of Fig.3, a coupling capacitor formed by a dielectric layer 43 floating connects to the pixel electrode 42 so that the first and second pixel electrode have different voltages V1 and V2. Although problems arising from the non-uniform cell gap can be solved, the liquid crystal has after-images due to the denseless property of dielectric layer.

### SUMMARY

An object of the present invention is to improve and resolve gamma washout phenomenon of a VA type liquid crystal display.

Another object of the present invention is to improve and resolve gamma washout phenomenon of a VA type liquid crystal display by utilizing two thin film transistors with different open currents to drive two different pixel electrodes in a pixel electrode unit.

VA type liquid crystal displays with widen viewing angle are provided. In an exemplary embodiment, a VA type liquid crystal display comprising a plurality of pixel areas, wherein each pixel area is driven by a source line and a gate line, comprises the following: a first substrate disposed opposite a second substrate with a liquid crystal layer interposed therebetween; a first pixel driving device and a second pixel driving device coupled to a first pixel electrode and a second pixel electrode respectively formed on the first substrate. The first and the second pixel electrode have a plurality of slits, wherein the first and second pixel driving devices have mutually different open currents, resulting in the first and the second pixel electrodes having mutually different voltages so that the liquid crystal layer comprises two liquid crystal orientation areas having mutually different orientation directions. A common electrode having one or more protrusions or slits is formed on the interior of the second substrate.

Further, in the embodiment, the first and the second pixel driving devices can be two thin film transistors.

In another exemplary embodiment, a VA type liquid crystal display comprises a plurality of pixel areas, wherein each pixel area comprises a transversely extending gate line and a longitudinally extending source line formed on a first substrate. A first thin film transistor formed on the first substrate has a first source and a first drain. A second thin film transistor formed on the first substrate has a second source and a second drain, in which the first and the second thin film transistors have mutually different open currents. A first pixel electrode having a plurality of silts is electrically connected to the first source through the first drain so that the first pixel electrode has a first voltage. A second pixel electrode having a plurality of silts is electrically connected to the second source through the second drain so that the second pixel electrode has a second voltage distinct from the first voltage, in which there is a voltage difference between the first and the second voltages. A second substrate is disposed opposite the first substrate. A liquid crystal layer is interposed between the first and the second substrates. A common electrode having a plurality of silts or protrusions formed on an interior of the second substrate generates different voltage differences with the first and the second pixel electrodes respectively so that the liquid crystal layer has two different liquid crystal orientations.

In another exemplary embodiment, a VA type liquid crystal display comprises a plurality of pixel areas, wherein each pixel area comprises a transversely extending gate line and a longitudinally extending source line formed on a first substrate. A first thin film transistor formed on the first substrate has a first source and a first drain. A second thin film transistor formed on the first substrate has the first source and a second drain, wherein the first and second thin film transistors have mutually different open currents. A first pixel electrode having a plurality of silts is electrically connected to the first source through the first drain so that the first pixel electrode has a first voltage. A second pixel electrode having a plurality of silts is electrically connected to the first source through the second drain so that the second pixel electrode has a second voltage distinct from the first voltage, in which a voltage difference exists between the first and second voltages. A second substrate disposed opposite the first substrate with a liquid crystal layer interposed therebetween. A common electrode having a plurality of silts or protrusions formed on an interior of the second substrate generates different voltage differences with the first and the second pixel electrodes respectively so that the liquid crystal layer has two different liquid crystal orientation directions.

Further scope of applicability of the disclosure will become apparent from the detailed description given hereinafter. It should be understood that the detailed description and specific examples are given by way of illustration only, since various changes and modifications within the spirit and scope of the disclosure will become apparent to those skilled in the art from this detailed description.

### DESCRIPTION OF THE DRAWINGS

Fig.1 is a diagram of voltage-transmittance of a VA type liquid crystal display with different viewing angles.
Fig.2 is a schematic diagram of pixel division.
Fig.3 is a schematic diagram of a conventional liquid crystal display according to the Fig.2.
Fig.4 is a schematic diagram of another conventional liquid crystal display according to the Fig.2.
Fig.5 is a schematic diagram of a VA type liquid crystal display embodiment of the invention.
Fig.6 is a schematic diagram of another VA type liquid crystal display embodiment of the invention.
Fig. 7 is a diagram of a pixel layout of the first VA type liquid crystal display embodiment of the invention.
Fig. 8 is a diagram of a pixel layout of the second VA type liquid crystal display embodiment of the invention.
Fig. 9 is a diagram of a pixel layout of the third VA type liquid crystal display embodiment of the invention.

### DETAILED DESCRIPTION OF THE INVENTION

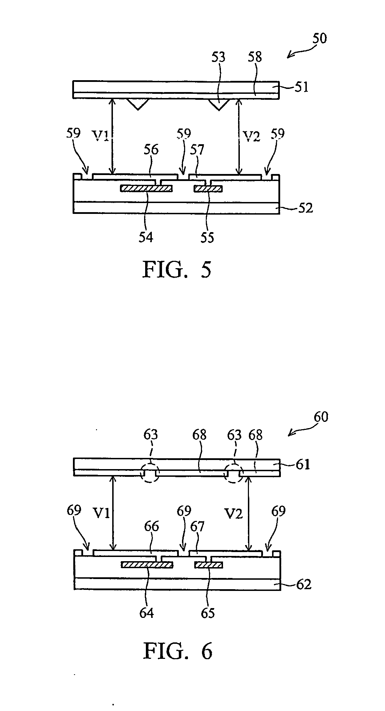

Fig.5 is a schematic diagram of an embodiment of the invention. A MVA (multi-domain vertical alignment) type liquid crystal display 50 has an upper substrate 51 and a lower substrate 52 opposite to the upper substrate 51, wherein liquid crystal (not shown in Fig.5) is interposed therebetween. A common electrode 58, such as indium tin oxide (ITO) or indium zinc oxide (IZO) layers, is disposed on an interior of the upper substrate 51. The common electrode 58 has a plurality of protrusions 53, such as dielectric or photoresist materials, to change the orientation of liquid crystal elements. The lower substrate 52 has a first driving device 54 and a second driving device 55 respectively electrical connected to a first pixel electrode 56 and a second pixel electrode 57, wherein the first pixel electrode 56 is not coupled to the second pixel electrode 57. The first pixel electrode 56 and the second pixel electrode 57 have one or more silts 59. The first driving device 54 and the second driving device 55, such as a thin film transistor, have different open circuits to ensure that the first pixel electrode 56 and the second pixel electrode 57 have different voltage, V1 and V2, so that liquid crystal elements have different orientations. In this embodiment of present invention, the first pixel driving device 54 and second pixel driving device 55 can be two thin film transistors.

Fig.6 is a schematic diagram of another embodiment of the invention. A patterned vertical alignment (PVA) type liquid crystal display 60 has an upper substrate 61 and a lower substrate 62 opposite to the upper substrate 61, wherein liquid crystal (not shown in Fig.6) is interposed therebetween. A common electrode 68, such as indium tin oxide (ITO) or indium zinc oxide (IZO) layers, is disposed on an interior of the upper substrate 61. The common electrode 68 has a plurality of silts 63 to change the direction of orientation of liquid crystal elements. The lower substrate 62 has a first driving device 64 and a second driving device 65 respectively electrically connected to a first pixel electrode 66 and a second pixel electrode 67, wherein the first pixel electrode 66 is not coupled to the second pixel electrode 67. The first pixel electrode 66 and the second pixel electrode 67 have a plurality of silts 69. The first driving device 64 and the second driving device 65, such as a thin film transistors, have different open circuits to ensure that the first pixel electrode 66 and the second pixel electrode 67 have different voltages, V1 and V2, so that liquid crystal elements have different orientations.

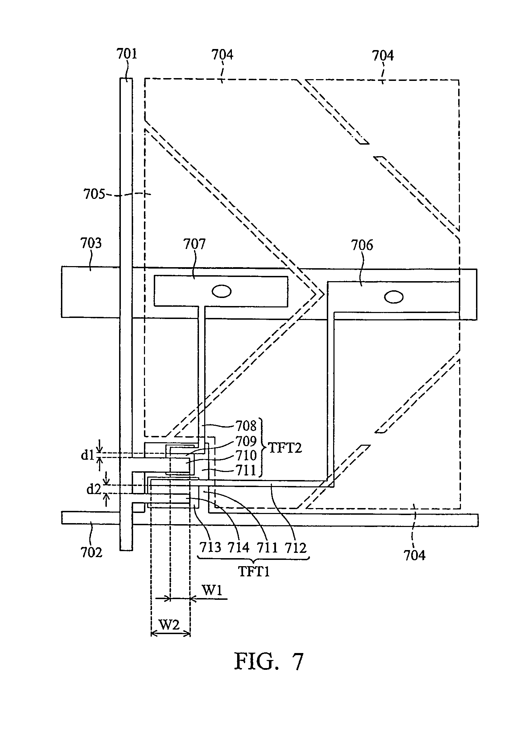

Fig. 7 is a diagram of a pixel layout of the first embodiment of the invention. A pixel electrode is divided into a first pixel electrode 704 and a second pixel electrode 705, wherein the first pixel electrode 704 is not connected to the second pixel electrode 705. The first pixel electrode 704 is driven by a first thin film transistor TFT-1 and the second pixel electrode is driven by a second thin film transistor TFT-2, wherein the TFT-1 and TFT-2 have different open currents. The TFT-1 comprises a first source 714 formed of an extension of source line 701, a first drain 712, a gate 711 formed by an extension of gate line 702 and a channel layer 713. The first drain 712 is formed of an extension of a first extension 706 formed on a storage capacitance electrode line (Cs) 703. When the TFT-1 is switched on, the first source 714 generates a potential difference with the first drain 712 through the channel layer 713, and then generates a voltage V1 on the first extension 706 through the first drain 712 to drive the first pixel electrode 704. The TFT-2 comprises a second source 710 formed by an extension of source 701, a second drain 708, the gate 711 formed by an extension of gate line 702 and a channel layer 709. The second drain 708 is an extension of a second extension 707 formed on the storage capacitance electrode line 703. When TFT-2 is switched on, a potential difference is generated between the second source 710 and second drain 708 through the channel layer 709, and then a voltage V2 is generated on the second extension 707 through the second drain 708 to drive the second pixel electrode 705. To ensure that the TFT-1 and TFT-2 have different open currents, the channel 709 of TFT-2 and the channel layer 713 of TFT-1 satisfy the equation, W1/d1≠ W2/d2.

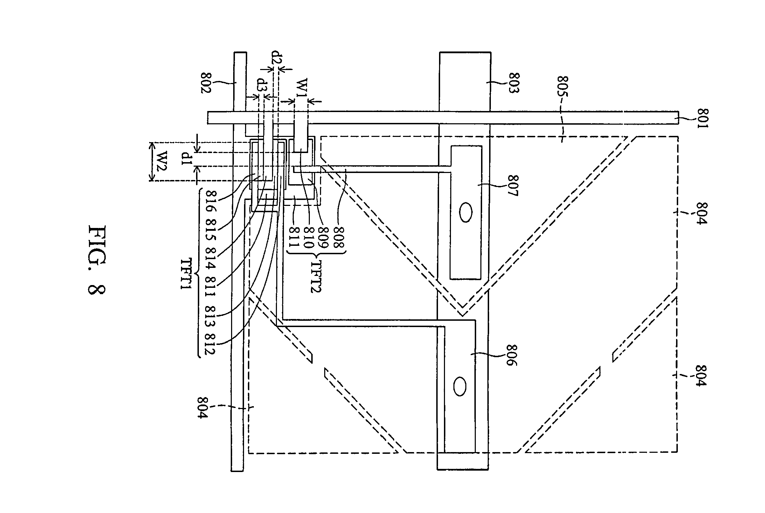

Fig. 8 is a diagram of a pixel layout of the second embodiment of the invention. A pixel electrode is divided into a first pixel electrode 804 and a second pixel electrode 805, wherein the first pixel electrode 804 is not connected to the second pixel electrode 805. The first pixel electrode 804 is driven by a first thin film transistor TFT-1 and the second pixel electrode is driven by a second thin film transistor TFT-2, wherein the TFT-1 and the TFT-2 have different open currents. Fig. 8 shows the dual drain design of TFT-1. The TFT-1 comprises a first source 814 formed of an extension of a source line 801,a first drain 812, a second drain 816, a first channel layer 813, a second channel layer 815 and a gate 811 formed of an extension of gate line 802. The first drain 812 and second drain 816 are an extension of a first extension 806 formed on a storage capacitance electrode line 803. When TFT-1 is switched on, the first source 814 generates potential differences with the first drain 812 and second drain 816 respectively through the first channel layer 813 and second channel layer 815, and then a voltage V1 is generated on the first extension 806 through the first drain 812 and second drain 816 to drive the first pixel electrode 804. The TFT-2 comprises a second source 810 formed of an extension of source line 801, a third drain 808, a gate 811 formed of an extension of the gate line 802 and a third channel layer 809. The third drain 808 is an extension of a second extension 807 formed on the storage capacitance electrode line 803. When TFT-2 is switched on, a potential differences is generated between the second source 810 and the third drain 808 through third channel layer 809, and then a voltage V2 is generated on the second extension 807 through the third drain 808 to drive the second pixel electrode 805. To ensure that the TFT-1 and TFT-2 have different open currents, the first channel layer 813 and second channel layer 815 of TFT-1 and the third channel layer 809 of TFT-2 satisfy W1/d1≠ W2/d2+W3/d3.

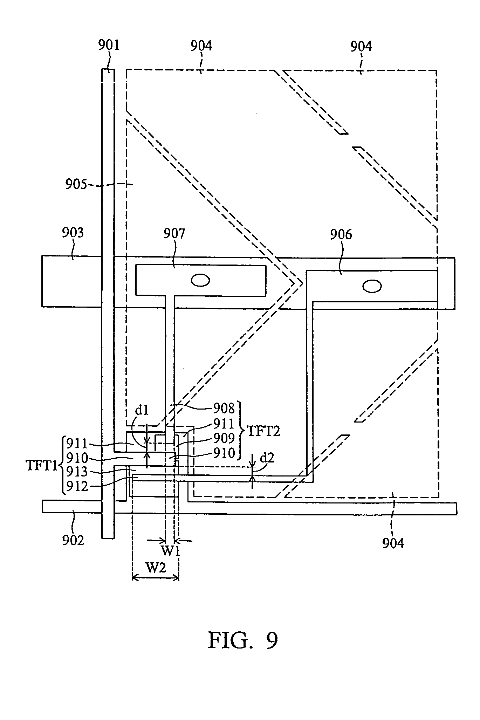

Fig. 9 is a diagram of a pixel layout of the third embodiment of the invention. A pixel electrode is divided into a first pixel electrode 904 and a second pixel electrode 905, wherein the first pixel electrode 904 is not connected to the second pixel electrode 905. The first pixel electrode 904 is driven by a first thin film transistor TFT-1 and the second pixel electrode 905 is driven by a second thin film transistor TFT-2, wherein the TFT-1 and TFT-2 have different open currents. The design of the embodiment illustrated in Fig. 9 employs a common source for TFT-1 and TFT-2. The TFT-1 comprises a source 910 formed of an extension of source line 901, a first drain 912, a first channel layer 913 and a gate 911 formed of an extension of a gate line 902. The first drain 912 is an extension of a first extension 906 formed on a storage capacitance electrode line 903. When TFT-1 is switched on, the source 910 generates a potential difference with the first drain 912 through the first channel layer 913, and then a voltage V1 is generated on the first extension 906 through the first drain 912 to drive the first pixel electrode 904. The TFT-2 comprises the source 910 formed of an extension of the source line 901, a second drain 908, a second channel layer 909 and the gate 911 formed of an extension of a gate line 902. The second drain 908 is an extension of the second extension 907 formed on the storage capacitance electrode line 903. When TFT-2 is switched on, the source 910 generates a potential difference with the second drain 908 through the second channel layer 909, and then a voltage V2 is generated on the second extension 907 to drive the second pixel electrode 905. To ensure that the TFT-1 and the TFT-2 have different open currents, the second channel 909 of TFT-2 and the first channel layer 713 of TFT-1 satisfy the equation, W1/d1≠ W2/d2.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A vertical alignment type liquid crystal display comprising a plurality of pixel areas, each pixel area being driven by a source line and a gate line, comprising:
a first substrate;
a second substrate disposed opposite the first substrate;
a liquid crystal layer interposed between the first substrate and the second substrate;
a first pixel electrode and a second pixel electrode formed on the first substrate, wherein the second pixel electrode is not coupled to the first pixel electrode and the first and the second pixel electrodes comprise a plurality of silts;
a first pixel driving device coupled to the first pixel electrode formed on the first substrate;
a second pixel driving device coupled to the second pixel electrode formed on the first substrate, wherein the first and the second pixel driving devices have different open currents so that the first pixel electrode and the second pixel electrode have different voltages; and
a common electrode having a plurality of silts or protrusions formed on an interior of the second substrate, wherein different voltage differences are generated between the common electrode and the first pixel electrode and between the common electrode and the second pixel electrode respectively so that the liquid crystal layer having mutually has two different liquid crystal orientations.

2. The liquid crystal display of claim 1, further comprising a storage capacitance electrode line parallel to the gate line formed on the first substrate.

3. The liquid crystal display of claim 1, wherein the first and the second pixel electrodes are indium tin oxide (ITO) or indium zinc oxide (IZO) layers.

4. The liquid crystal display of claim 1, wherein the common electrode is an ITO or IZO layer.

5. The liquid crystal display of claim 1, wherein the first pixel driving device is a first thin film transistor and the second pixel driving device is a second thin film transistor.

6. The liquid crystal display of claim 5, wherein the first and the second thin film transistors have mutually different ratios of width to length (W/L ).

7. A vertical alignment type liquid crystal display comprising a plurality of pixel areas, each pixel area comprising:
a transversely extending gate line and a longitudinally extending source line formed on a first substrate;
a first thin film transistor formed on the first substrate having a first source and a first drain;
a second thin film transistor formed on the first substrate having a second source and a second drain, wherein the first and second thin film transistors have mutually different open currents;
a first pixel electrode having a plurality of silts being electrically connected to the first source through by the first drain so that the first pixel electrode has a first voltage;
a second pixel electrode having a plurality of silts being electrically connected to the second source through by the second drain so that the second pixel electrode has a second voltage distinct from the first voltage, wherein there is a voltage difference between the first and the second voltages;
a second substrate opposite the first substrate;
a liquid crystal layer interposed between the first and the second substrates; and
a common electrode having a plurality of silts or protrusions formed on an interior of the second substrate, wherein different voltage drop existingdifferences are generated between the common electrode and the first pixel electrode and between the common electrode and second pixel electrode respectively so that the liquid crystal layer having mutuallyhas two different liquid crystal orientations.

8. The liquid crystal display of claim 7, further comprising a storage capacitance electrode line parallel to the gate line formed on the first substrate.

9. The liquid crystal display of claim 7, wherein the first and second thin film transistors have a disposition order, first drain, first source, second drain and second source.

10. The liquid crystal display of claim 7, wherein the first and the second pixel electrodes are indium tin oxide (ITO) or indium zinc oxide (IZO) layers.

11. The liquid crystal display of claim 7, wherein the common electrode is an ITO or IZO layer.

12. The liquid crystal display of claim 7, wherein the first and the second thin film transistors have the same gate.

13. The liquid crystal display of claim 7, wherein the first and the second thin film transistors have mutually different ratio of width to length(W/L ).

14. A vertical alignment type liquid crystal display comprising a plurality of pixel areas, each pixel area comprising:
a transversely extending gate line and a longitudinally extending source line formed on a first substrate;
a first thin film transistor formed on the first substrate having a first source and a first drain;
a second thin film transistor formed on the first substrate having the first source and a second drain, wherein the first and second thin film transistors have mutually different open currents;
a first pixel electrode having a plurality of silts being electrically connected to the first source through by the first drain so that the first pixel electrode has a first voltage;
a second pixel electrode having a plurality of silts being electrically connected to the first source through by the second drain so that the second pixel electrode has a second voltage distinct from the first voltage, wherein there is a voltage difference between the first and second voltages;
a second substrate opposite the first substrate;
a liquid crystal layer interposed between the first and the second substrates; and
a common electrode having a plurality of silts or protrusions formed on an interior of the second substrate, wherein different voltage drop existingdifferences are generated between the common electrode and the first pixel electrode and between the common electrode and second pixel electrode respectively so that the liquid crystal layer having mutuallyhas two different liquid crystal orientations.

15. The liquid crystal display of claim 14, further comprising a storage capacitance electrode line parallel to the gate line formed on the first substrate.

16. The liquid crystal display of claim 14, wherein the first and the second pixel electrodes are indium tin oxide (ITO) or indium zinc oxide (IZO) layers.

17. The liquid crystal display of claim 14, wherein the common electrode is an ITO or IZO layer.

18. The liquid crystal display of claim 14, wherein the first and the second thin film transistors have the same gate.

19. The liquid crystal display of claim 14, wherein the first and the second thin film transistor have mutually different ratios of width to length(W/L ).
